# EUROPEAN PATENT APPLICATION

(11) **EP 1 512 644 A1**
(43) Date of publication of application: **09.03.2005**
(21) Application number: 04077326.9
(22) Date of filing: 17.08.2004
(51) Int. Cl.: B65G 1/04

(54) **Method and apparatus in conjunction with a high-rise storage facility**

(30) Priority: 18.08.2003 FI 20031163
(71) Applicant: Awa Advanced Warehouse Automation Oy, 01601 Vantaa (FI)
(72) Inventor: Haimala, Juha, 03400 Vihti (FI); Ahti, Alvar, 02160 Espoo (FI)
(74) Representative: Laine, Terho Tapio (FI)

(57) **Abstract**

A method for feeding loads into and out of a high-rise storage facility (1), said high-rise storage facility comprising at least one storage rack (2) which contains mutually adjacent and superimposed storage locations (3), and a load handling device (4), such as a stacker, for taking loads into and out of a storage location (3), and in which method loads are brought to at least one input location (7), from where the load handling device transports the load further into a storage location, and correspondingly when a load is to be removed from the storage location, it is transported by the load handling device (4) to at least one output location (7). In the method, when a load is to be introduced into the storage facility, the load is brought to one of the input locations (7) disposed within a large area, from where the load handling device (4) takes the load to a storage location (3), and correspondingly when a load is to be removed from the storage facility, the load is taken by the load handling device (4) to one of the output locations (7) disposed within a large area (A), from where the load is moved on for further processing.

## Description

### Background of the invention

The present invention relates to a method as defined in the preamble of claim 1 for feeding loads into and out of a high-rise storage facility, said high-rise storage facility comprising at least one storage rack which contains mutually adjacent and superimposed storage locations, and a load handling device, such as a stacker, for taking loads into and out of a storage location, and in which method loads are supplied to at least one input location, from where the load handling device transports the load further into a storage location, and correspondingly when a load is to be removed from the storage location, it is transported by the load handling device to at least one output location.

The invention also relates to an apparatus as defined in the preamble of claim 13 for feeding loads into and out of a high-rise storage facility, said high-rise storage facility comprising at least one storage rack which contains mutually adjacent and superimposed storage locations, and a load handling device, such as a stacker, for taking loads from an input location to a storage location and correspondingly from a storage location to an output location.

Thus, the invention is concerned with storage technology in general and with high-rise storage facilities in particular, which typically comprise at least one load handling device, such as a stacker, which takes products to be stored into a storage location in a storage rack.

High-rise storage facilities are typically used in conjunction with processes preceding and following them at the ends of storerooms, in other words, the units to be stored are transported by conveyors or other auxiliary devices to the end of the storage facility, to a given point intended for input, to a supply station, from where the load handling devices of the storage facility transport them to a storage rack. Similarly, the load handling devices of the storage facility transport the units to be delivered from the storage to a given point intended for output, to a delivery station, from where the auxiliary devices move them further to the destination. In some cases, the supply station and the delivery station may also be located in places other than the ends of the storeroom, but this is typically only possible in special cases. The supply station and delivery station being located at defined positions, the load handling capacity of the load handling devices of the storage facility, such as stackers, is determined according to how much time is required for the passage between the supply/delivery station and the storage locations. The industry standards typically assume that the supply station and delivery station are located at predetermined points. When the number of supply and delivery points is limited and predetermined, momentary traffic peaks in the units may lead to a blockage of the system. Likewise, error situations or disturbances of even short duration may be harmful to the operation of the system.

The object of the present invention is to create a completely new type of method and apparatus designed to avoid the drawbacks of prior-art solutions.

### Brief description of the invention

The method of the invention is mainly characterized in that, when a load is to be introduced into the storage, the load is brought to one of input locations disposed within a large area, from where a load handling device takes the load to a storage location, and correspondingly when a load is to be retrieved from the storage, the load is taken by a load handling device to one of output locations disposed within a large area, from where the load is moved on for further processing.

The method of the invention is additionally characterized by what is stated in claims 2 - 12.

The apparatus of the invention is characterized in that the input locations and/or output locations are disposed within a large area and that the apparatus comprises means for bringing / taking loads to the input locations / from the output locations.

The apparatus of the invention is additionally characterized by what is stated in claims 14 - 19.

The solution of the invention has numerous significant advantages. In the new method, the input and output locations, i.e. the supply locations and delivery locations, may be anywhere within a given area and their number is preferably multiple times larger as compared with prior-art solutions. In the method, the incoming unit is moved within the storage area to a place as close as possible to a storage location, and the transfer of the unit performed by the load handling device of the storage facility is preferably of short duration. Correspondingly, when the load handling devices of the storage facility handle outgoing units, these are moved to one of several nearest locations instead of a given point, whereupon they are moved further by auxiliary devices. In a preferred embodiment, incoming units are always moved to a position opposite the final storage location and outgoing units are removed on the same principle from the same position in the storage at which they have been stored. Other advantages provided by the invention include: better tolerance of momentary traffic variations, better tolerance of momentary disruptions of operation and higher handling capacity due to shorter transfer distances.

In the application, 'load' refers generally to a unit to be stored.

### Brief description of the figures

In the following, the invention will be described in detail with reference to an example and the attached drawing, wherein
Fig. 1 is a diagram of an embodiment of the invention,
Fig. 2 presents a section taken along line II-II in Fig. 1.

### Detailed description of the invention

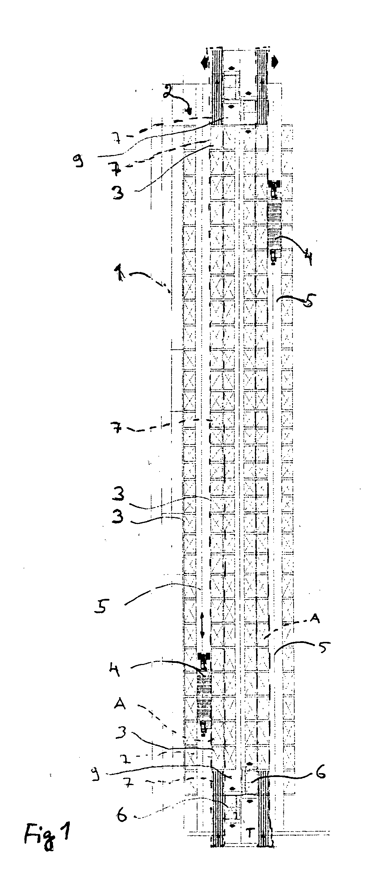

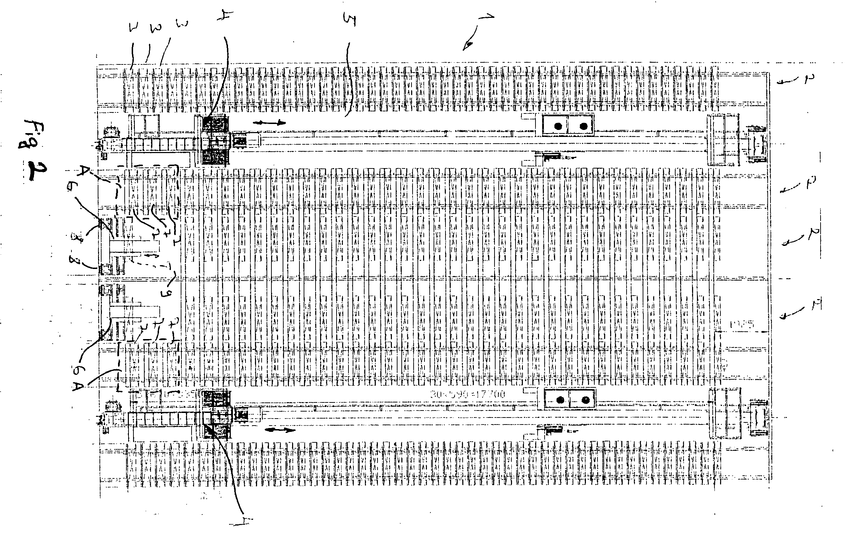

Figures 1 and 2 represent a high-rise storage facility 1 according to the invention. The high-rise storage facility 1 comprises at least one storage rack 2, in the figure a plurality of storage racks, which contain storage locations 3. Arranged in the storage facility is a load handling device 4, such as a stacker or equivalent for transporting loads T into and out of storage locations 3. The load handling device 4 has been arranged to travel in a passage 5 between storage racks 2 placed on either side of it in the case illustrated in the figures. In the case illustrated, the high-rise storage facility additionally comprises two load handling devices 4 and their passages 5 and also two corridors for auxiliary devices, and each of these corridors can be provided with several auxiliary devices 6, such as transfer cars, traveling in them. According to the invention, the input locations, i.e. load receiving locations 7, and the delivery locations, i.e. load delivery points of the high-rise storage facility are arranged within a large area A. The input locations 7 and the output locations may consist of the same locations, to which the loads are brought in order to be either placed in the storage or taken out from it.

The invention concerns a method for feeding loads into and out of a high-rise storage facility 1, said high-rise storage facility comprising at least one storage rack 2 which contains mutually adjacent and superimposed storage locations 3, and a load handling device 4, such as a stacker, for taking loads into and out of the storage location 3, and in which method loads are brought to at least one input location 7, from where the load handling device transports the load further to a storage location, and correspondingly when a load is to be removed from the storage location, the load is transported by the load handling device 4 to at least one output location 7. In the method, when a load is to be introduced into the storage, the load is brought to one of input locations 7 disposed within a large area, from where a load handling device 4 takes the load to a storage location 3, and correspondingly when a load is to be retrieved from the storage, the load is taken by a load handling device 4 to one of output locations 7 disposed within a large area, from where the load is moved on for further processing. According to a preferred embodiment, when a load is to be fed into the storage, it is moved, preferably by means of an auxiliary device 6, within the storage area to an input location 7 situated as close as possible to the storage location 3, from which input location 7 the load is transported by a load handling device 4, especially a stacker, to the storage location 3. Correspondingly, when a load is to be taken out from the storage, it is moved by a load handling device 4, especially a stacker, to an output location 7 situated as close as possible to the storage location 3, from which output location 7 the load is moved further, preferably by means of an auxiliary device 6, for further processing. Thus, the distance traveled by the stacker when moving the load and therefore the time consumed by the stacker per load can be minimized. In a preferred case, the load is brought in the storage facility to an input location 7 that is situated at least horizontally, in the direction of motion of the load handling device 4, substantially opposite to or near the storage location 3. When a load is to be taken out of the storage, it is moved to an output location 7 that is situated at least horizontally, in the direction of motion of the load handling device 4, substantially opposite to or near the storage location 3.

When a load is to be introduced into the storage facility, the load is brought to one of the several input locations 7 provided near the passage of the load handling device 4, from where the load handling device takes the load into a storage location 3.

When the load is to be taken out from the storage facility, each load is brought to one of the several output locations 7 provided near the passage 4 of the load handling device 4.

Typically, when loads are to be introduced, they are brought to input locations 7 provided along the passage 5 of the load handling device 4, especially a stacker, preferably along the entire length of the passage or at least along part of its length. When loads are to be retrieved, they are brought by the load handling device 4, such as a stacker, to output locations 7 provided along the passage 5 of the load handling device 4, preferably along the entire length of the passage or at least along part of its length. According to an embodiment, all the locations 7 can be used both as input locations and as output locations. In another embodiment, some of the locations 7 serve as input locations and others as output locations.

In the method of the invention, loads are carried to the input locations 7 by means of an auxiliary device 6, such as a transfer car, which has been arranged to travel in the vicinity of the input locations 7, preferably so that the input locations 7 remain between the passage 5 of the load handling device 4 and the passage of the auxiliary device 6.

Similarly, loads are carried from the output locations 7 by means of an auxiliary device 6, such as a transfer car, which has been arranged to travel in the vicinity of the output locations 7, preferably so that the output locations 7 remain between the passage 5 of the load handling device 4 and the passage of the transfer car 6.

Loads are taken/brought to the input locations 7 and/or output locations 7 by means of an auxiliary device 6, such as a transfer car, for which a passage is provided in the lower part of the storage rack 2, preferably in a direction parallel to the passage 5 of the load handling device 4, such as a stacker. In Fig. 2, the transfer car 6 has been arranged to travel between the vertical supports of the storage rack, so some of the lower shelves of the rack are missing due to the space reserved for the transfer car. In the adjacent storage rack, the bottommost storage locations can be used as input locations and/or output locations 7. Such locations 7 may be provided on different tiers if the transfer car 6 is provided with a hoisting device supporting this function.

An apparatus according to the invention for feeding loads into and out of a high-rise storage facility, said high-rise storage facility 1 comprising at least one storage rack 2 which contains mutually adjacent and superimposed storage locations 3, and a load handling device 4, such as a stacker, for carrying loads into a storage location 3 and similarly from the storage location to an output location. The input locations 7 and/or output locations 7 are disposed within a large area A and the apparatus comprises means 6 for bringing / taking loads to said input locations / from said output locations.

The input locations 7 and/or output locations 7 are disposed in the vicinity of a passage 5 in which the load handling device 4 of the storage facility travels. The input locations and/or output locations are arranged along the passage 5 of the load handling device 4, preferably along its entire length or at least part of its length. The means for bringing/taking loads to the input locations / from the output locations comprise an auxiliary device 6, such as a transfer car, which has been arranged to travel in the vicinity of input locations 7 and/or output locations 7, preferably so that the input locations 7 and/or output locations 7 remain between the passage 5 of the load handling device 4 and the passage of the auxiliary device 6.

The passage of the auxiliary device 6, such as a transfer car, is disposed in the lower part of the storage rack 2, preferably in a direction parallel to the passage 5 of the load handling device 4, such as a stacker. The auxiliary device 6, such as a transfer car comprises means for lifting and/or lowering a load to an input location and/or from an output location. The apparatus may comprise a plurality of auxiliary devices 6, such as transfer cars, and/or load handling devices 4, such as stackers.

The auxiliary device 6, such as a transfer car used in the apparatus of the invention may be provided with load handling elements designed to extend to the input locations/output locations 7, which are disposed beside the passage 9 of the car.

The load handling elements, supported by linear-motion elements known in themselves, such as rail or shaft elements, may be movable from the top of the transfer car to the input locations/output locations 7. The load handling elements have been arranged to move transversely relative to the main directions of motion of the car.

The storage facility of the invention may have even very large dimensions. A typical storage facility is e.g. 100 m long, 20 m high and 20 m wide. The number and size of storage locations naturally depends on the loads to be stored. Typically, high-rise storage facilities may contain thousands, even tens of thousands of storage locations.

It is obvious to the person skilled in the art that the invention is not limited to the example described above, but that it may be varied within the scope of the claims presented below.

## Claims

1. A method for feeding loads into and out of a high-rise storage facility (1), said high-rise storage facility comprising at least one storage rack (2) which contains mutually adjacent and superimposed storage locations (3), and a load handling device (4), such as a stacker, for taking loads into and out of a storage location (3), and in which method loads are brought to at least one input location (7), from where the load handling device transports the load further into a storage location, and correspondingly when a load is to be removed from the storage location, it is transported by the load handling device (4) to at least one output location (7), **characterized in that**, in the method, when a load is to be introduced into the storage facility, the load is brought to one of the input locations (7) disposed within a large area, from where the load handling device (4) takes the load to a storage location (3), and correspondingly when a load is to be removed from the storage facility, the load is taken by the load handling device (4) to one of the output locations (7) disposed within a large area (A), from where the load is moved on for further processing.

2. A method according to claim 1, **characterized in that**, when a load is to be fed into the storage, it is moved, preferably by means of an auxiliary device (6), within the storage area to an input location (7) situated as close as possible to the storage location (3), from which input location (7) the load is transported by the load handling device (4), especially a stacker, to the storage location (3).

3. A method according to claim 1or 2, **characterized in that**, when a load is to be taken out from the storage, it is moved by the load handling device (4), especially a stacker, to an output location (7) situated as close as possible to the storage location (3), from which output location (7) the load is moved on, preferably by means of an auxiliary device (6), for further processing.

4. A method according to any one of claims 1 - 3, **characterized in that**, when a load is to be introduced into the storage facility, the load is brought to one of the several input locations (7) provided near the passage of the load handling device (4).

5. A method according to any one of claims 1 - 4, **characterized in that**, when loads are to be removed from the storage facility, each load is brought to one of the several output locations (7) provided near the passage (5) of the load handling device (4).

6. A method according to any one of claims 1 - 5, **characterized in that** the load is brought in the storage facility to an input location (7) situated at least horizontally, in the direction of motion of the load handling device (4), substantially opposite to or near the storage location (3).

7. A method according to any one of claims 1 - 6, **characterized in that**, when a load is to be removed from the storage facility, it is moved to an output location (7) situated at least horizontally, in the direction of motion of the load handling device (4), substantially opposite to or near the storage location (3).

8. A method according to any one of claims 1 - 7, **characterized in that**, when loads are to be introduced, they are brought to input locations (7) provided along the passage (5) of the load handling device (4), especially a stacker, preferably along the entire length of the passage or at least along part of its length.

9. A method according to any one of claims 1 - 8, **characterized in that**, when loads are to be retrieved, they are brought by the load handling device (4), such as a stacker, to output locations (7) provided along the passage (5) of the load handling device (4), preferably along the entire length of the passage or at least along part of its length.

10. A method according to any one of claims 1 - 9, **characterized in that** loads are carried to the input locations (7) by means of an auxiliary device (6), such as a transfer car, which has been arranged to travel in the vicinity of the input locations (7), preferably so that the input locations (7) remain between the passage (5) of the load handling device (4) and the passage (9) of the auxiliary device (6).

11. A method according to any one of claims 1 - 10, **characterized in that** loads are carried from the output locations (7) by means of an auxiliary device (6), such as a transfer car, which has been arranged to travel in the vicinity of the output locations (7), preferably so that the output locations (7) remain between the passage (5) of the load handling device (4) and the passage (9) of the transfer car (6).

12. A method according to any one of claims 1 - 11, **characterized in that** loads are taken/brought to the input locations (7) and/or output locations (7) by means of an auxiliary device (6), such as a transfer car, for which a passage (9) is provided in the lower part of the storage rack (2), preferably in a direction parallel to the passage (5) of the load handling device (4), such as a stacker.

13. An apparatus for feeding loads into and out of a high-rise storage facility, said high-rise storage facility (1) comprising at least one storage rack (2) which contains mutually adjacent and superimposed storage locations (3), and a load handling device (4), such as a stacker, for taking loads from an input location (7) to a storage location (3) and correspondingly from a storage location (3) to an output location, **characterized in that** the input locations (7) and/or output locations (7) are disposed within a large area (A) and that the apparatus comprises means (6) for bringing / taking loads to said input locations / from said output locations.

14. An apparatus according to claim 13, **characterized in that** the input locations (7) and/or output locations (7) are disposed in the vicinity of the passage (5) of the load handling device (4) of the storage facility.

15. An apparatus according to claim 13 or 14, **characterized in that** the input locations (7) and/or output locations (7) are disposed along the passage (5) of the load handling device (4), preferably along its entire length or at least along part of its length.

16. An apparatus according to any one of claims 13 - 15, **characterized in that** the means for bringing / taking loads to the input locations / from the output locations comprise an auxiliary device (6), such as transfer car, which has been arranged to travel in the vicinity of the input locations (7) and/or output locations (7), preferably so that the input locations (7) and/or output locations (7) remain between the passage (5) of the load handling device (4) and the passage (9) of the auxiliary device (6).

17. An apparatus according to any one of claims 13 - 16, **characterized in that** the passage (9) of the auxiliary device (6), such as a transfer car, is disposed in the lower part of the storage rack (3) of the high-rise storage facility, preferably in a direction parallel to the passage (5) of the load handling device (4), such as a stacker.

18. An apparatus according to any one of claims 13 - 17, **characterized in that** the auxiliary device (6), such as a transfer car comprises means for lifting and/or lowering a load to an input location and/or from an output location (7).

19. An apparatus according to any one of claims 13 - 18, **characterized in that** the apparatus comprises a plurality of auxiliary devices (6), such as transfer cars, and/or load handling devices (4), such as stackers.
